# EUROPEAN PATENT APPLICATION

(11) **EP 4 745 045 A1**
(43) Date of publication of application: **20.05.2026**
(21) Application number: 24275123.8
(22) Date of filing: 13.11.2024
(51) Int. Cl.: B64G 1/64, B64G 1/00

(54) **MULTISTAGE AIR VEHICLE**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A separation mechanism (300) for a multi-stage air vehicle is disclosed. The separation mechanism comprises a first component (310) for attaching to a first stage of the multistage air vehicle, and a second component (320) for attaching to a second stage of the multistage air vehicle. The first and second components comprise mutually cooperating outer parts. The mechanism (300) comprises one or more locking lugs (330) arranged, in a joined state, to engage the outer parts of both the first and the second components so as to mechanically join the first and second components, and an activation mechanism (360) operable to allow the locking lugs (330) to move inwardly to a released state in which the first component is released form the second component. A multistage air vehicle (100, figure 1) using the separation mechanism (300) is also disclosed.

## Description

### FIELD OF THE INVENTION

This invention relates to multistage air vehicles, and more particularly to multistage air vehicles in which it is necessary to separate one stage from another during flight of the air vehicle.

### BACKGROUND

The use of multiple stages in rocket-propelled air vehicles is known. A number of separation mechanisms are known for separating the stages at the appropriate point during flight. For example, manacle rings or cutting charges can be used. However, manacle rings necessarily affect the outer profile of the air vehicle, and so can affect both the aerodynamic properties of the air vehicle and its observability. Cutting charges, when operated, necessarily result in the expulsion of gases which can also affect the observability of the air vehicle.

### SUMMARY OF THE INVENTION

In accordance with a first aspect of the present invention, there is provided a separation mechanism for a multi-stage air vehicle, the separation mechanism comprising a first component for attaching to a first stage of the multistage air vehicle, and a second component for attaching to a second stage of the multistage air vehicle, the first and second components comprising mutually cooperating outer parts; the mechanism comprising one or more locking lugs arranged, in a joined state, to engage the outer parts of both the first and the second components so as to mechanically join the first and second components, and an activation mechanism operable to allow the locking lugs to move inwardly to a released state in which the first component is released form the second component.

Such a separation mechanism can be contained within the envelope of the air vehicle without affecting its observable profile. For example, the outer parts of the first component may overlap the outer parts of the second components. Moreover, in the joined state, the separation mechanism is able to withstand high loads such as those that might arise at high speed flight. It is expected that the separation mechanism will be able to withstand loads equivalent to those that might be withstood by a manacle ring of equivalent diameter.

The locking lugs may be biased inwardly. For example, each locking lug may be associated with a spring arranged to bias said each locking lug inwardly.

The separation mechanism may further comprise an actuator operable to move the locking lugs inwardly. For example, each locking lug may be associated with an electronic actuator.

The activation mechanism may comprise an activation pin and a release piece, the one or more locking lugs abut the release piece, and the activation mechanism is arranged such that, when the activation pin is removed, the release piece moves to allow the locking lugs to move inwardly. The locking lugs may abut the release piece at an angle.

There may be two or more locking lugs. The separation mechanism may comprise six locking lugs. The separation mechanism may comprise twelve locking lugs.

The locking lugs may be arranged so to balance loads arising on the activation mechanism from the locking lugs.

The one or more locking lugs may extend radially from the activation mechanism.

The one or more locking lugs may pass through apertures in the first component so as to engage with the second component.

The invention extends to a multistage air vehicle comprising first and second stages, which first and second stages are joined by the separation mechanism of any one of the preceding claims.

The one or more locking lugs may extend in a direction generally perpendicular to the axis of the air vehicle.

The one or more locking lugs extend in a direction at an angle to the perpendicular to the axis of the air vehicle. By arranging the locking lugs at an angle to the perpendicular to the axis of the vehicle, a wider range of loads can be supported by the separation mechanism. Such a configuration may therefore be suitable for supporting high loads.

The first stage may comprise a rocket engine. The outer parts of the first component may be integral with the first stage of the multi stage vehicle. The outer parts of the second stage may be integral with the second stage of the multi stage vehicle. The outer parts of the second component may overlap the outer parts of the first component. The separation mechanism may be arranged such that, in the released state, the locking lugs remain attached to the first component. In this way, the second stage can continue flight without the additional weight of the locking lugs, and without any observable artefacts of the separation mechanism. The second first stage may comprise a rocket engine or a turbine engine

### BRIEF DESCRIPTION OF THE DRAWINGS

Embodiments of the invention will now be described by way of example only and with reference to the accompanying drawings, of which:
Figure 1a is a schematic diagram of a two stage air vehicle according to an embodiment of the invention in which the stages are joined;
Figure 1b is a schematic diagram of the air vehicle shown in Figure 1a after the stages have been separated;
Figure 2a is a schematic cross sectional diagram of the interface between the two stages of the air vehicle shown in Figure 1a, with the two stages joined;
Figure 2b is a schematic cross sectional diagram of the interface between the two stages of the air vehicle shown in Figure 1a after the stages have been separated;
Figure 3a is a schematic illustration of a separation mechanism according to a further embodiment of the invention, in a joined state;
Figure 3b is a schematic cross-sectional illustration of the separation mechanism of Figure 3a; and
Figure 3c is a schematic cross-sectional illustration of the separation mechanism of Figure 3a in a released state.

### DETAILED DESCRIPTION

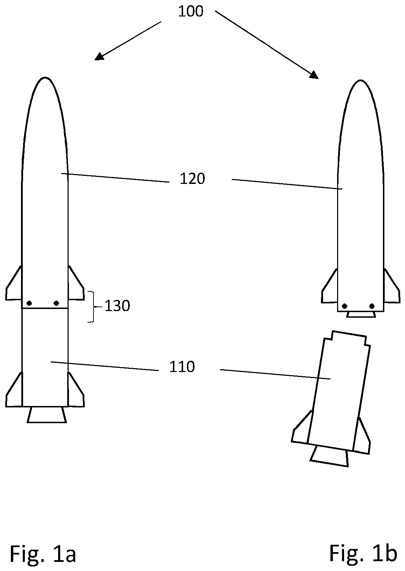

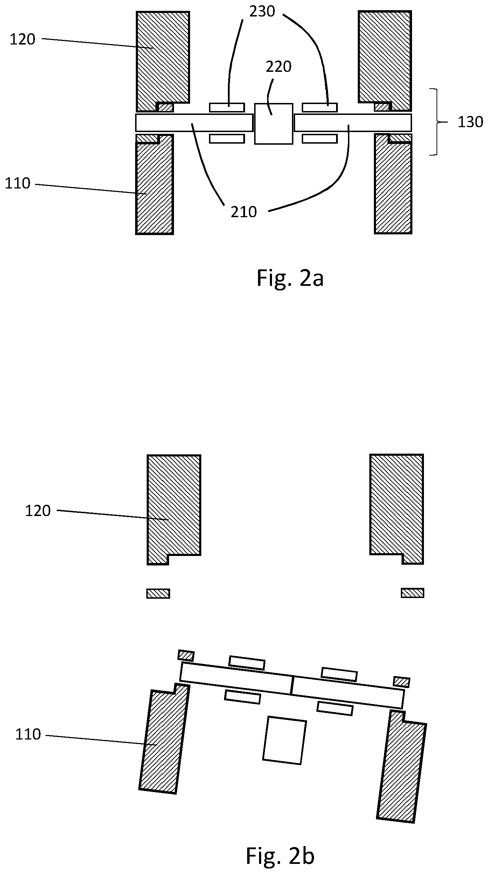

Figure 1a is a schematic illustration of a multistage air vehicle 100 having a first stage 110, and a second stage 120. First and second stages 110 and 120 are joined at an interface region referenced generally at 130 and described in further detail below with reference to Figures 2a and 2b. Both first and second stages comprise rocket engines, are generally cylindrical at the interface region, and are provided with flight control surfaces. Second stage 120 has an ogive nose. In a first stage of flight, the air vehicle is propelled by the rocket engine of the first stage 110. At a point in the flight of the air vehicle, for example when the first stage has run out of fuel, the second stage 120 separates from the first stage 110, and the second stage continues its flight propelled by its rocket engine, whilst the first stage falls away, as is illustrated schematically in Figure 1b.

Before separation, the first and second stages 110, 120 are joined at the interface region 130 as illustrated in Figure 2a. A number of locking lugs 210 are provided in the interface region to mechanically secure the first stage to the second stage. At one end, the locking lugs 210 abut a locking pin 220 positioned on the axis of the vehicle. The locking lugs extend outwardly from the locking pin in a direction that is generally perpendicular to the axis of the air vehicle. At the interface region, the outer cylindrical part of the airframes of both the first and second stages overlap, and the locking lugs pass through apertures in the airframes of both the first and second stages, thereby securing the first stage to the second stage. The primary load path is through the locking lugs at the outer sections that pass through the airframes of the first and second stage, rather than through the locking pin 220. Springs 230 are associated with each locking lug 210 and arranged to bias the locking lugs 210 inwardly. It will be appreciated that, instead of passive actuators such as springs arranged to bias the locking lugs inwardly, many other types of actuator, including for example electronic actuators, can also be used.

At the point at which it is desired to separate the two stages, locking pin 220 is moved so that the locking lugs 210 can move inwardly. The locking pin may be moved for example by a pyrotechnic device, or by an electronic actuator. Once the locking pin is removed, the locking lugs are free to move inwardly to a position in which they do not pass through the apertures in the second stage 120. Once the locking lugs have moved, there is nothing to hold the first and second stages together. The first stage is therefore free to move away from the second stage. Actual separation occurs as a result of aerodynamic forces. It will also be possible to use a separate mechanism to initiate separation, such as a further spring, or a small explosive charge arranged to push the two stages apart. After separation, the second stage 120 can initiate its engine so as to continue flight.

During separation, there is no expansion outside the envelope of the air vehicle, as might be the case were a mechanism such as a manacle ring to be used. Nor is it necessary for any gas expulsion to occur, as is necessary where radial cutting charges are used to separate the two stages. In air vehicle 100, the only motion is internal to the air vehicle envelope. It will also be noted that, after separation, with the outer part of the second stage overlapping the outer part of the first stage, no artefacts of the separation mechanism remain observable on the second stage of the vehicle, which continues flight.

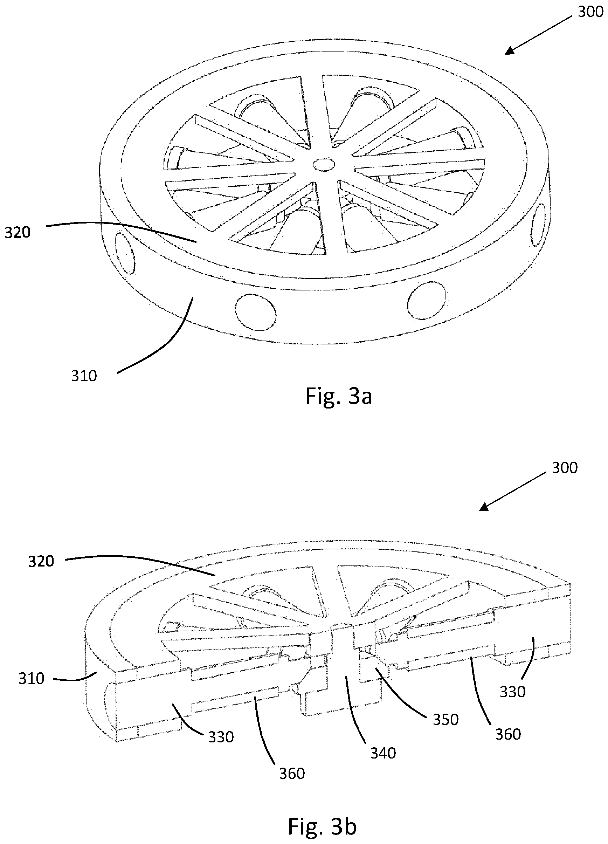

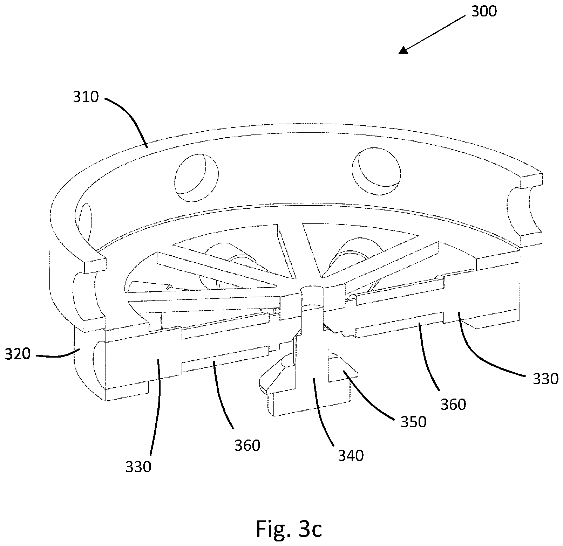

Figures 3a, 3b and 3c illustrate schematically a separation mechanism 300 in accordance with an embodiment of the invention. Figure 3b is a cross-sectional view through the mechanism 300 illustrated in Figure 3a. Figures 3a and 3b show the separation mechanism in the joined state. Figure 3c is a cross-sectional view through the mechanism 300 in a released state. Separation mechanism 300 comprises a first component 310 and a second component 320, and may be used to enable separation of two stages of an air vehicle such as air vehicle 100 during flight. In such an application separation mechanism 300 forms an interface region between the two stages of the air vehicle. Component 310 may be attached to or integrally formed with a first stage, and component 320 may be attached to or integrally formed with a second stage. Separation mechanism 300 securely fastens components 310 and 320 together until activated. After the separation mechanism has been activated, components 310 and 320 can be separated, so as to enable, for example, a first and second stage of an air vehicle to be separated, as shown in Figure 3c.

Separation mechanism 300 comprises a number of locking lugs 330, an activation mechanism comprising a locking pin 340, and a release piece 350. In a joined state, with components 310 and 320 fastened together by the mechanism, locking lugs 330 abut the release piece 350, and the release piece is held in place by the locking pin 340. In separation mechanism 300, there are eight locking lugs which extend radially outwards from the activation mechanism. In the joined state, the locking lugs pass through apertures in generally cylindrical parts of components 310 and 320 so as to hold the components together. The apertures are distributed generally evenly around the circumference of the outer part of each of components 310 and 320.

In order to separate components 310 and 320, the activation mechanism is operated to remove the locking pin. A pyrotechnic device or electronic actuator may be used to remove the locking pin. Once the locking pin is removed, the release piece 350 is no longer held in position. Each locking lug 330 has an associated locking lug actuator 360 operable to move the locking lugs inwardly. The locking lug actuators are, in the present embodiment, passive actuators such as springs. The release piece 350 is therefore pushed out of the way as a result of the action of the locking lug actuators if it has not already fallen away as a result of the removal of the locking pin. The locking lugs move inwardly so that they no longer engage the outer component 310. Components 310 and 320 are then free to separate. Actual separation may occur through aerodynamic forces operating on the two stages, or through the use of a further actuator pushing the components apart.

The primary load path passes from component 310 to component 320 through the locking lugs 330 towards the outer parts of the mechanism 300. The activation mechanism, positioned inwardly of the locking lugs at the centre of the mechanism, is predominantly isolated from these loads. Loads arising from contact between the locking lugs and the release piece are balanced, because the locking lugs are arranged in opposing pairs, with a locking lug either side of the activation mechanism. Reduced loads are applied along the axis of the activation mechanism. In addition, loads transmitted to the activation mechanism as a result of contact between the locking lugs and the release piece are proportional to the contact angle between the locking lugs and the release piece, further reducing the loads applied to the activation mechanism. The reduced load requirements for the activation mechanism enable commercial off the shelf devices to be used for the activation mechanism, rather than requiring bespoke components.

Mechanism 300 enables two stages of an air vehicle to be separated without any components expanding radially outside of the original envelope of the air vehicle. As described above, this is not the case where manacle rings are used to join stages, or where cutting charges are employed to enable separation. Radial expansion can impact low observability performance. Moreover, in the joined state, mechanism 300 is expected to be able to withstand greater loads than a manacle ring of similar dimensions. The high load tolerance enables relatively higher loads to be carried using tail constructions having a relatively smaller tail diameter when using separation mechanism 300; and the tail section can also be profiled for improved aerodynamic performance, or to meet low observability requirements.

Whilst a number of specific embodiments of the invention have been described above, those skilled in the art will appreciate that variations and modifications to those embodiments are possible. For example, it will be noted that many different configurations of the locking lugs will be possible. Different numbers of locking lugs can be used. In some examples it is expected that use of six or twelve locking lugs may be optimal. It is also possible for the locking lugs to be arranged so as to balance out loads on the activation mechanism in other configurations that in pairs. For example, three locking lugs may be regularly distributed around the activation mechanism, and extending radially from the activation mechanism, so as to balance loads.

Various other configurations for the locking lugs and activation mechanism are also possible. For example, the activation mechanism can be mounted off-centre, with locking lugs mounted at various different angles to balance loads. The shape and configuration of the locking lugs and activation mechanism may change as the geometry of the air vehicle changes. For example, the air vehicle may have a square or hexagonal cross-section, or various other cross-sectional shapes, and the configuration of the locking lugs and outer parts of the separation mechanism can change accordingly. In addition, whilst it has been described in the above for the locking lugs to be arranged in a plane perpendicular to the axis of the air vehicle, it may be that the locking lugs are arranged at different angles relative to the plane perpendicular to the axis of the air vehicle so as to better withstand loads that may arise in flight.

In addition, whilst, in the above, the locking lugs are described as passing through apertures in both first and second stages, it will be noted that the aperture in the outer stage may be a detente, so that the locking lugs are not externally visible, and need not be made flush with the external surface of the air vehicle, as may be necessary to ensure aerodynamic performance is not affected. Whilst, in the above, it has been describes that both the first and second stages of the air vehicle comprise rocket engines, it is possible in some applications for the second stage (which continues flight after separation of the first stage) to be powered by an alternative form of engine, such as a turbine engine. It will also be understood that, whilst in the above a multistage air vehicle having two stages has been described, the separation mechanism will be suitable for use in multistage air vehicles having three or more stages. It may be that the separation mechanism may be used to separate two stages in a three stage vehicle, whilst an alternative method to separate the other stages may be used. For example, in a three stage vehicle, a first stage may be separated using a manacle ring arrangement to allow two remaining joined stages to continue flight. The remaining joined stages may be joined using a separation mechanism such as those described above.

Finally, it should be clearly understood that any feature described above in relation to any one embodiment may be used alone, or in combination with other features described, and may also be used in combination with one or more features of any other of the embodiments, or any combination of any other of the embodiments.

## Claims

1. A separation mechanism for a multi-stage air vehicle, the separation mechanism comprising a first component for attaching to a first stage of the multistage air vehicle, and a second component for attaching to a second stage of the multistage air vehicle, the first and second components comprising mutually cooperating outer parts; the mechanism comprising one or more locking lugs arranged, in a joined state, to engage the outer parts of both the first and the second components so as to mechanically join the first and second components, and an activation mechanism operable to allow the locking lugs to move inwardly to a released state in which the first component is released form the second component.

2. A separation mechanism as claimed in claim 1, wherein the locking lugs are biased inwardly.

3. A separation mechanism as claimed in claim 1, further comprising an actuator operable to move the locking lugs inwardly.

4. A separation mechanism as claimed in any one of the preceding claims, wherein the activation mechanism comprises an activation pin and a release piece, the one or more locking lugs abut the release piece, and the activation mechanism is arranged such that, when the activation pin is removed, the release piece moves to allow the locking lugs to move inwardly.

5. A separation mechanism as claimed in any one of the preceding claims, comprising two or more locking lugs.

6. A separation mechanism as claimed in any one of the preceding claims comprising six locking lugs.

7. A separation mechanism as claimed in any one of the preceding claims comprising twelve locking lugs.

8. A separation mechanism as claimed in any one of the preceding claims wherein the locking lugs are arranged so to balance loads arising on the activation mechanism from the locking lugs.

9. A separation mechanism as claimed in any one of the preceding claims wherein the one or more locking lugs extend radially from the activation mechanism.

10. A separation mechanism as claimed in any one of the preceding claims wherein the one or more locking lugs pass through apertures in the first component so as to engage with the second component.

11. A multistage air vehicle comprising first and second stages, which first and second stages are joined by the separation mechanism of any one of the preceding claims.

12. A multistage air vehicle as claimed in claim 11 wherein the one or more locking lugs extend in a direction generally perpendicular to the axis of the air vehicle.

13. A multistage air vehicle as claimed in claim 11 wherein the one or more locking lugs extend in a direction at an angle to the perpendicular to the axis of the air vehicle.

14. A multistage air vehicle as claimed in any one or claims 11 to 13, wherein the first stage comprises a rocket engine.
